(19) Europäisches Patentamt
European Patent Office
Office européen des brevets

(11) **EP 3 783 850 B1**

(12) **EUROPEAN PATENT SPECIFICATION**

(45) Date of publication and mention
of the grant of the patent:
**01.04.2026 Bulletin 2026/14**

(21) Application number: **20190066.9**

(22) Date of filing: **07.08.2020**

(51) International Patent Classification (IPC):
**H04L 45/121** (2022.01)    **H04L 45/24** (2022.01)
**H04L 45/12** (2022.01)    **H04L 45/243** (2022.01)

(52) Cooperative Patent Classification (CPC):
**H04L 45/24; H04L 45/121; H04L 45/123;
H04L 45/243**

(54) **TRANSMISSION SYSTEM, TRANSMISSION DEVICE, AND TRANSMISSION PATH ALLOCATION METHOD**

ÜBERTRAGUNGSSYSTEM, ÜBERTRAGUNGSVORRICHTUNG UND ÜBERTRAGUNGSWEGZUWEISUNGSVERFAHREN

SYSTÈME DE TRANSMISSION, DISPOSITIF DE TRANSMISSION ET PROCÉDÉ D'ATTRIBUTION DE TRAJET DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2019 TW 108129659**

(43) Date of publication of application:
**24.02.2021 Bulletin 2021/08**

(73) Proprietor: **Arcadyan Technology Corporation
Hsinchu City 30071 (TW)**

(72) Inventor: **HUANG, Kuo-Shu
300 Hsinchu City (TW)**

(74) Representative: **Viering, Jentschura & Partner mbB
Patent- und Rechtsanwälte
Am Brauhaus 8
01099 Dresden (DE)**

(56) References cited:
**EP-B1- 1 359 720          WO-A1-2018/113393
JP-A- H 027 762          US-A1- 2006 039 287
US-A1- 2015 207 715          US-A1- 2019 306 052**

**Description**

BACKGROUND OF THE INVENTION

Field of the Invention

The invention relates to a transmission system and a transmission path allocation method.

Description of the Related Art

Along with the development in the network technology, various communication technologies are provided one after another. Communication equipment can transmit data packets through various transmission paths. Different transmission paths have different advantages and adaptable scenario. The user switch to a most suitable transmission path according to the needs.

However, the transmission speed of the transmission path often varies with the usage rate, the external environment or the state of the transmission equipment. If the data packets are transmitted through the same transmission path, the transmission efficiency may be greatly affected. US 2015/207715 A1, JP H02 7762 A, and WO 2018/113393 A1 disclose some further known designs.

SUMMARY OF THE INVENTION

According to the present invention, a transmission path allocation method according to claim 1 is provided. A transmission system according to the present invention is defined in claim 7. The dependent claims show some examples of such a system and method, respectively. The invention is directed to a transmission system and a transmission path allocation method, in which the data packets are transmitted through a plurality of transmission paths. Each of the data packets is adaptably allocated to a suitable transmission path to achieve the optimization of the transmission efficiency.

According to a first aspect embodiment of the present invention, a transmission path allocation method is provided. The transmission path allocation method is configured to transmit a plurality of data packets through at least two transmission paths. Each of the transmission paths has a send buffer. The transmission path allocation method includes the following steps. A transmission time length for each of the transmission paths is analyzed according to an output data variation of each of the send buffers. Each of the data packets is allocated to the transmission paths according to each of the transmission time lengths. A sequential code is attached to each of the data packets. Each of the data packets is transmitted.

According to a second aspect embodiment of the present invention, a transmission system including a transmission device and a reception device is provided. The transmission device includes a data transmission unit, a transmission analysis unit, an allocation unit and an encoding unit. The data transmission unit is configured to transmit a plurality of data packets through at least two transmission paths. Each of the transmission paths has a send buffer. The transmission analysis unit is configured to analyze a transmission time length for each of the transmission paths according to an output data variation of each of the send buffers. The allocation unit is configured to allocate each of the data packets to the transmission paths according to each of the transmission time lengths. The encoding unit is configured to attach a sequential code to each of the data packets. The reception device includes a data reception unit configured to receive the data packets.

According to a third aspect embodiment of the present invention, a transmission device including a data transmission unit, a transmission analysis unit, an allocation unit and an encoding unit is provided. The data transmission unit is configured to transmit a plurality of data packets through at least two transmission paths. Each of the transmission paths has a send buffer. The transmission analysis unit is configured to analyze a transmission time length for each of the transmission paths according to an output data variation of each of the send buffers. The allocation unit is configured to allocate each of the data packets to the transmission paths according to each of the transmission time lengths. The encoding unit is configured to encode each of the data packets.

According to a fourth aspect embodiment of the present invention, when the output data variation of the send buffer cannot be directly measured, the packet quantity inputted to the send buffer at a particular (or designated) time interval can be measured first. Since the packet quantity at the send buffer can be measured (or directly read) at any time point, the output data variation of the send buffer can be obtained according to the following formula: $O = I - I1_i + I1_{i-1}$.

Wherein $I1_i$ represents a packet quantity at the next send buffer; $I1_{i-1}$ represents a packet quantity at the original send buffer; O represents an output data variation, I represents a packet quantity inputted to the send buffer during this time interval. The instant output speed over this time period can be obtained according to the following formula: $S1_i = \dfrac{O}{tint}$.

Wherein *tint* represents time interval, $S1_i$ represents an instant output speed at this time interval. After taking the instant output speed at each historical time point into consideration, a weighted average output speed can be obtained according to the following formula: $\overline{S1}_i = \alpha \times \overline{S1}_{i-1} + (1-\alpha) \times S1_i$.

Wherein, $\overline{S1}_i$ represents a weighted average output speed; $\alpha$ represents a weighting coefficient in a range of 0 to 1, and the more important the instant output speed at each historical time point, the larger the value of $\alpha$ (closer to 1). The data output speed can be estimated according to one of S1, and $S1_i$, and can be directly used if the only the instant output speed is concerned.

The above and other aspects of the invention will become better understood with regard to the following detailed description of the preferred but non-limiting embodiment(s). The following description is made with reference to the accompanying drawings.

BRIEF DESCRIPTION OF THE DRAWINGS

FIG. 1 is a schematic diagram of scenarios to which the transmission path allocation method of the present disclosure is adaptable.

FIG. 2 is a schematic diagram of a transmission system according to an embodiment.

FIG. 3 is a flowchart of a transmission path allocation method according to an embodiment.

FIG. 4 is a schematic diagram of two transmission paths.

FIG. 5 is a schematic diagram of sequential codes attached to data packets.

FIG. 6 is a schematic diagram of a plurality of sub-packets transmitted through a plurality of transmission paths, wherein the sub-packets are obtained from the division of a data packet.

FIG. 7 is a relation diagram of packet data volume and transmission time length.

DETAILED DESCRIPTION OF THE INVENTION

According to the embodiment of the present disclosure, data packets are transmitted through a plurality of transmission paths, wherein each of the data packets can be adaptably allocated to a suitable transmission path, such that the transmission efficiency can be optimized.

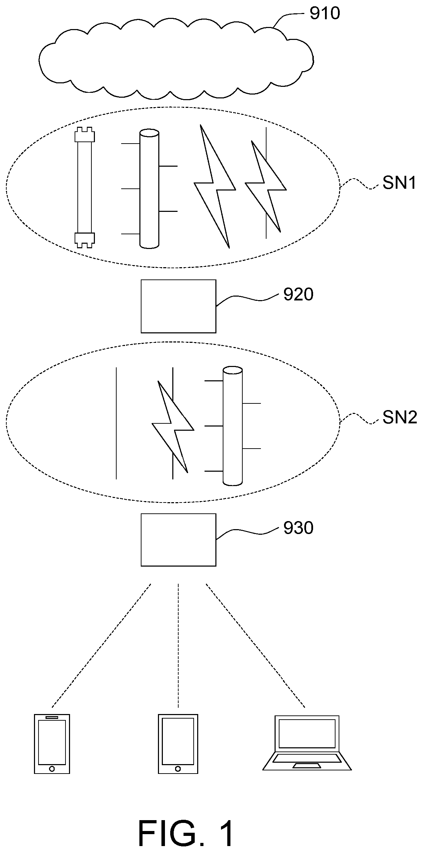

Referring to FIG. 1, a schematic diagram of scenarios SN1 and SN2 to which the transmission path allocation method of the present disclosure is adaptable is shown. In scenario SN1, data can be transmitted between an Internet 910 and a home gateway (HGW) 920 through a wireless network path, an LTE path, an Ethernet network, a power line network or a fiber network. In scenario SN2, data can be transmitted between the home gateway 920 and a signal repeater (RE) 930 through an Ethernet network, a power line network, a 2.4G wireless network path or a 5G wireless network path.

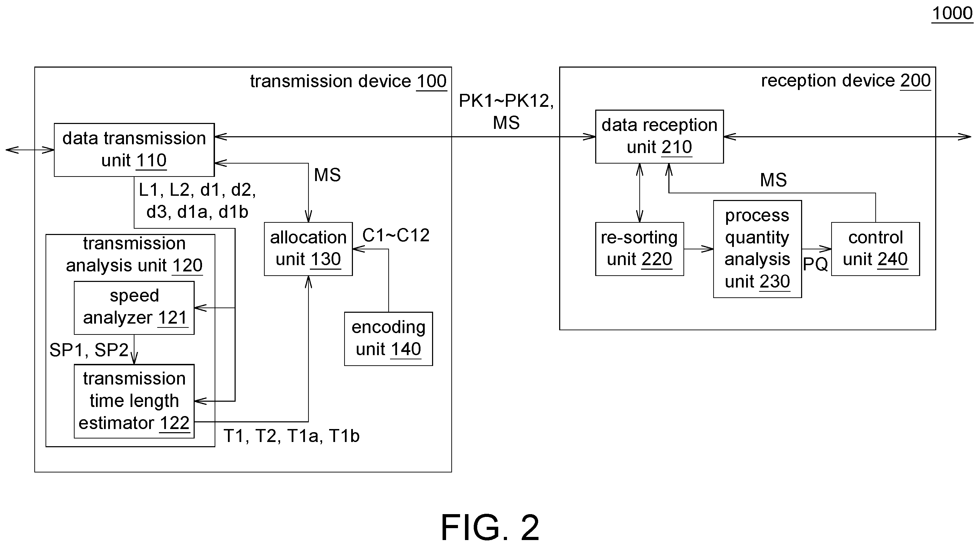

Referring to FIG. 2, a schematic diagram of a transmission system 1000 according to an embodiment is shown. The transmission system 1000 includes a transmission device 100 and a reception device 200. The transmission device 100 can be realized by such as a base station, a router, a home gateway, or a signal repeater. The reception device 200 can be realized by such as a base station, a router, a home gateway, or a signal repeater. The transmission device 100 includes a data transmission unit 110, a transmission analysis unit 120, an allocation unit 130 and an encoding unit 140. Detailed descriptions of each element of the transmission device 100 are disclosed below. The data transmission unit 110 is configured to transmit data, and can be realized by such as a network connection port, a radio frequency module, or an optical signal receiving module. The transmission analysis unit 120 is configured to analyze the transmission path. The allocation unit 130 is configured to allocate the data packets according to the analysis of the transmission path. The encoding unit 140 is configured to encode the data packets before the data packets are transmitted. The transmission analysis unit 120, the allocation unit 130 and the encoding unit 140 can be realized by such as a circuit, a chip, a circuit board, a storage device storing a number of programming codes. The transmission analysis unit 120, the allocation unit 130 and the encoding unit 140 can be realized by separate elements or can be integrated into one element.

The reception device 200 includes a data reception unit 210, a re-sorting unit 220, a process quantity analysis unit 230 and a control unit 240. Detailed descriptions of each element of the reception device 200 are disclosed below. The data reception unit 210 is configured to transmit data, and can be realized by such as a network connection port, a radio frequency module, or an optical signal receiving module. The re-sorting unit 220 is configured to sort the packets. The process quantity analysis unit 230 is configured to analyze the packet re-sorting process quantity. The control unit 240 is configured to sends a control instruction. The re-sorting unit 220, the process quantity analysis unit 230 and the control unit 240 can be realized by such as a circuit, a chip, a circuit board, a storage device storing a number of programming codes. The re-sorting unit 220, the process quantity analysis unit 230 and the control unit 240 can be realized by separate elements or can be integrated into one element.

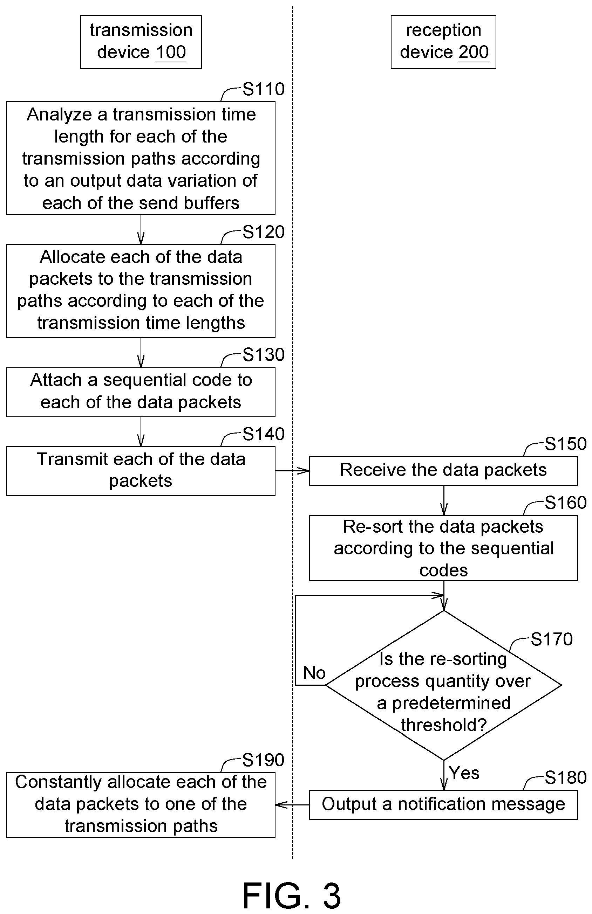

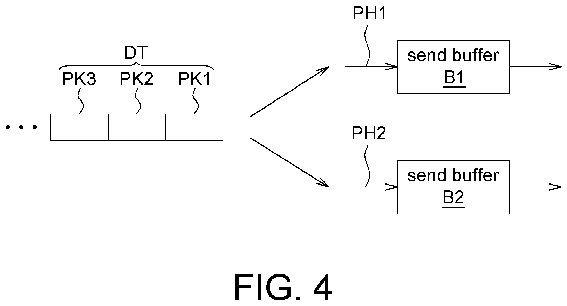

Refer to FIG. 3 and FIG. 4. FIG. 3 is a flowchart of a transmission path allocation method according to an embodiment. FIG. 4 is a schematic diagram of two transmission paths PH1 and PH2. The transmission path PH1 has a send buffer B1. The transmission path PH2 has a send buffer B2. Each of data packets PK1, PK2, PK3 ... and so on of the data DT can be allocated to a suitable transmission path through the transmission path allocation method. The operations of each element disclosed above are described below with an accompanying flowchart exemplified by the transmission paths PH1 and PH2 of FIG. 4.

In step S110, the transmission time lengths T1 and T2 of the transmission paths PH1 and PH2 (refer to FIG. 2) are analyzed by the transmission analysis unit 120 of the transmission device 100 according to the send buffers B1 and B2. In step S110, the data output speeds SP1 and SP2 of the send buffers B1 and B2 are firstly analyzed by the speed analyzer 121 of the transmission analysis unit 120. For example, the data output speed SP1 can be obtained according to formulas (1) to (4), wherein $l1_i$ represents a size of the send buffer B1 at the i-th time point; $l1_{i-1}$ represents a data volume of the send buffer B1 at the (i-1)-th time point ; $\sum_{j=1}^{M} d1_j$ represents a data volume inputted to the send buffer B1 from the (i-1)-th time point to the i-th time point; $q1_i$ represents an output data variation; *tint* represents a time interval; $S1_i$ represents an actual output speed at the i-th time point; $\overline{S1}$ represents a weighted average output speed; $\alpha$ and $(1 - \alpha)$ are weighting coefficients. The data output speed SP1 can be estimated according to one of $\overline{S1_i}$ and $S1_i$.

$$q1_i = \sum_{j=1}^{M} d1_j - l1_i + l1_{i-1} \dots\dots\dots\dots\dots\dots\dots\dots\dots\dots\dots \quad (1)$$

$$S1_i = \frac{q1_i}{tint} \dots\dots\dots\dots\dots\dots\dots\dots\dots\dots\dots\dots\dots \quad (2)$$

$$\overline{S1_i} = \alpha \times \overline{S1_{i-1}} + (1 - \alpha) \times S1_i \dots\dots\dots\dots\dots\dots\dots\dots \quad (3)$$

$$SP1 = S1_i \ or \ \overline{S1_i} \dots\dots\dots\dots\dots\dots\dots\dots\dots\dots\dots\dots \quad (4)$$

The estimation of the data output speed SP2 is similar to formulas (1) to (4), and the similarities are not repeated here.

In step S110, the transmission time lengths T1 and T2 required for completely transmitting the data packets PK1, PK2, PK3 ... and so on are calculated by the transmission time length estimator 122 of the transmission analysis unit 120 according to the to-be-transmitted data volumes L1 and L2 (refer to FIG. 2) of the send buffers B1 and B2 and the packet data volumes d1, d2, d3 (refer to FIG. 2) of the data packets PK1, PK2, PK3 ... and so on. For example, the transmission time length T1 required for transmitting the data packet PK1 through the transmission path PH1 can be obtained according to formula (5) below:

$$T1 = \frac{L1+d1}{SP1} \dots\dots\dots\dots\dots\dots\dots\dots\dots\dots\dots\dots\dots\dots\dots \quad (5)$$

The transmission time length T2 required for transmitting the data packets PK1 through the transmission path PH2 can be obtained according to formula (6) below:

$$T2 = \frac{L2+d1}{SP2} \dots\dots\dots\dots\dots\dots\dots\dots\dots\dots\dots\dots\dots\dots\dots \quad (6)$$

Then, the method proceeds to step S120, the data packets PK1, PK2, PK3 ... and so on are allocated to the transmission paths PH1 and PH2 by the allocation unit 130 of the transmission device 100 according to the transmission time lengths T1 and T2. In the present step, each of the data packets PK1, PK2, PK3 ... and so on will be adaptably allocated to a suitable one of the transmission paths PH1 and PH2. For example, the data packet PK1 is allocated to the transmission path PH1, the data packet PK2 is allocated to the transmission path PH2, the data packet PK3 is allocated to the transmission path PH1.

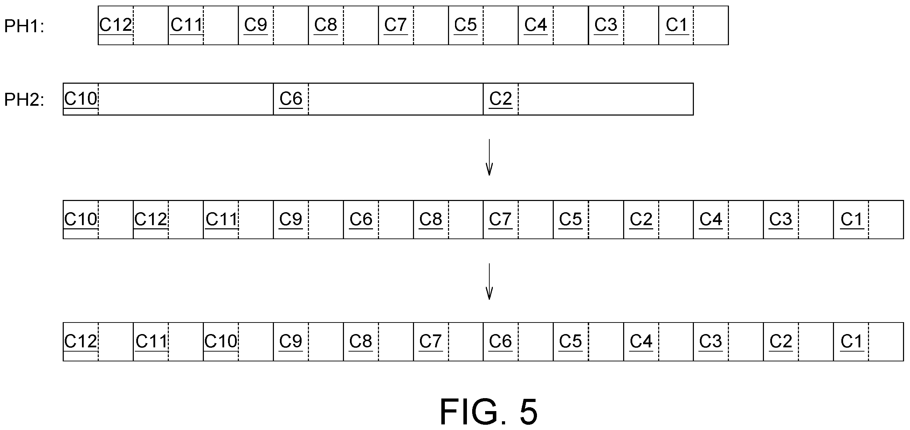

Then, the method proceeds to step S130, a sequential code is attached to each of the data packets PK1, PK2, PK3... by the encoding unit 140 of the transmission device 100. Referring to FIG. 5, a schematic diagram of sequential codes C1 to C12 attached to data packets PK1 to PK12 is shown. The encoding unit 140 attaches full-range sequential codes C1 to C12 to the data packets PK1 to PK12 respectively according to the original order. The full-range sequential codes C1 to C12 can be attached to the letter head of the data packets PK1 to PK12. According to the above allocation step, the data packets PK1, PK3 to PK5, PK7 to PK9, PK11, PK12 are transmitted through the transmission path PH1, and the data packets PK2, PK6, PK10 are transmitted through the transmission path PH2.

Then, the method proceeds to step S140, the data packets PK1, PK2, PK3 ... and so on are transmitted by the data transmission unit 110 of the transmission device 100.

Through the above steps, each of the data packets PK1, PK2, PK3 ... and so on will be adaptably allocated to a suitable one of the transmission paths PH1 and PH2 to achieve the optimization of the transmission efficiency.

Then, the method proceeds to step S150, the data packets PK1, PK2, PK3 ... and so on are received by the data reception unit 210 of the reception device 200. As indicated in FIG. 5, since the transmission time lengths T1 and T2 of the transmission paths PH1 and PH2 are different, the reception device 200 does not necessarily receive the data packets PK1 to PK12 according to the original order. The 3$^{rd}$ row of FIG. 5 shows that the data packets are received by the data reception unit 210 in the order of PK1, PK3, PK4, PK2, PK5, PK7, PK8, PK6, PK9, PK11, PK12, and PK10.

Then, the method proceeds to step S160, the data packets PK1 to PK12 are re-sorted by the re-sorting unit 220 of the reception device 200 according to the full-range sequential codes C1 to C12. In an embodiment, the data packets PK1 to PK12 are re-sorted according to the full-range sequential codes. The 4-th row of FIG. 5 shows that the re-sorted data packets are in the order of PK1 to PK12.

Thus, even when the data packets PK1 to PK12 are alternately transmitted through the transmission paths PH1 and PH2, the data packets PK1 to PK12 still can be re-sorted through the use of the full-range sequential codes C1 to C12.

The above sorting can be implemented by the sliding window method and the sliding window receiving register.

In the receiving register, the sorted packets are provided to the processor of a higher level and the data are erased.

In the receiving register, a re-sorting process quantity PQ is defined to calculate the re-sorting quantity for the packets having not been completely sorted. Although the network transmits data using an alternate method, as long as the network transmission is not congested, the alternate transmission of packets will not cause a huge increase in the re-sorting process quantity PQ unless one of the multipath intermediate nodes is congested.

In step S170, a re-sorting process quantity PQ (refer to FIG. 2) for re-sorting the data packets PK1 to PK12 is analyzed by the process quantity analysis unit 230 of the reception device 200. If the re-sorting process quantity PQ is over a predetermined threshold, then the method proceeds to step S180.

In step S180, a notification message MS is outputted by the control unit 240 of the reception device 200 for enabling the allocation unit 130 of the transmission device 100 to constantly allocate the subsequent data packets to one of the transmission paths PH1 and PH2 in step S190. That is, when the re-sorting process quantity PQ is too large, the allocation unit 130 of the transmission device 100 will switch to a constant transmission mode according to the notification message MS to avoid the reception device 200 performing re-sorting.

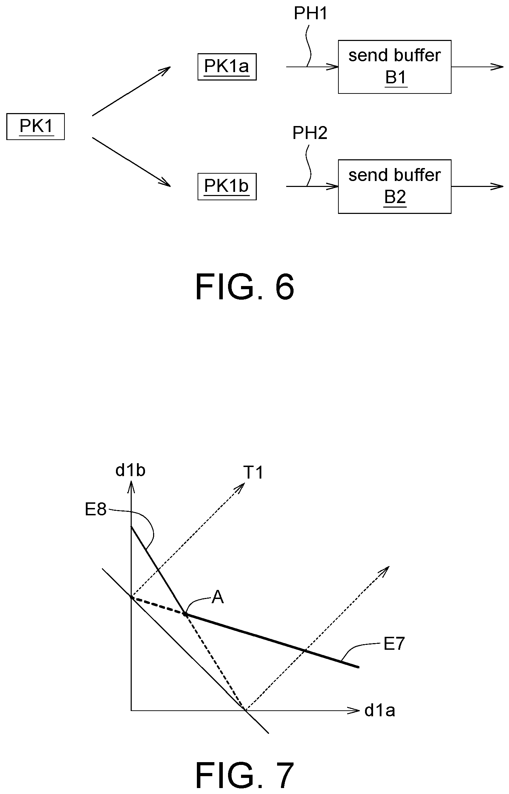

In the above embodiment, each of the data packets PK1 to PK12 is allocated to one of the transmission path PH1 to PH2. In another embodiment, one portion of the data packets PK1 can be allocated to one of the transmission paths PH1 and PH2, and another portion of the data packets PK1 can be allocated to the other one of the transmission paths PH1 and PH2. Referring to FIG. 6, a schematic diagram of sub-packets PK1a and PK1b transmitted through transmission paths PH1 and PH2 is shown, wherein the sub-packets PK1a and PK1b are obtained from the division of a data packet PK1.

The sub-packet PK1a has the packet data volume d1a (refer to FIG. 2), the sub-packet PK1b has the packet data volume d1b (refer to FIG. 2), and the packet data volume d1 of the data packets PK1 is the sum of d1a and d1b. The transmission time length T1a for transmitting the sub-packet PK1a through the transmission path PH1 can be obtained according to formula (7) below:

$$T1a = \frac{L1+d1a}{SP1} \quad \dots\dots\dots\dots\dots\dots\dots\dots\dots\dots\dots\dots\dots\dots\dots\dots\dots\dots \quad (7)$$

The transmission time length T1b for transmitting the sub-packet PK1b through the transmission path PH2 can be obtained according to formula (8) below:

$$T1b = \frac{L2+d1b}{SP2} \quad \dots\dots\dots\dots\dots\dots\dots\dots\dots\dots\dots\dots\dots\dots\dots\dots\dots\dots \quad (8)$$

The maximum of the transmission time length T1a and the transmission time length T1 (that is,

$$\max\left(\frac{L1+d1a}{SP1}, \frac{L2+d1b}{SP2}\right)$$ ) is the transmission time length required for completely transmitting the data packets PK1.

The transmission analysis unit 120 calculates the transmission time length T1 for minimizing $\max\left(\frac{L1+d1a}{SP1}, \frac{L2+d1b}{SP2}\right)$ according to formula (9) below:

$$T1 = \min\max\left(\frac{L1+d1a}{SP1}, \frac{L2+d1b}{SP2}\right), \quad d1 = d1a + d1b \dots \dots \dots \dots \dots \dots \quad (9)$$

Referring to FIG. 7, a relation diagram of packet data volumes d1a and d1b and transmission time lengths T1a, T1b, and T1 is shown. The straight lines E7 and E8 of FIG. 7 are respectively represented by the formulas (7) and (8). The intersection A of the straight line E7 and the straight line E8 is the optimum solution for minimizing $\max\left(\frac{L1+d1a}{SP1}, \frac{L2+d1b}{SP2}\right)$.

Thus, when the sub-packets PK1a and PK1b are concurrently transmitted through the transmission paths PH1 and PH2, the transmission efficiency can be optimized.

According to the embodiment disclosed above, each of the data packets can be adaptably allocated to a suitable transmission path. Even when the usage rate, the external environment or the state of the transmission equipment changes, data transmission still can be adaptably adjusted to achieve the optimization of the transmission efficiency.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A transmission path allocation method for a transmission system (1000), comprising a transmission device (100), for transmission of a plurality of data packets (PK1-PK12) through at least two transmission paths (PH1, PH2) each having a send buffer (B1, B2), wherein the transmission path allocation method comprises:

   obtaining a data output speed (SP1) of each of the send buffers (B1, B2) by dividing an output data variation (q1) with a time interval (tint) from a current time point to a next time point, and then weighted by at least one weighting coefficients (α), by a transmission analysis unit (120) of the transmission device (100), wherein the output data variation (q1) is obtained based on a size and a data amount of one of the send buffers (B1, B2) at a current time point and a next time point and a data amount inputted to the one of the send buffers (B1, B2) from the current time point to the next time point;
   obtaining a transmission time length (T1, T2) for each of the transmission paths (PH1, PH2) according to the data output speed (SP1), a to-be-transmitted data amount (L1, L2) of each of the send buffers (B1, B2), and a packet length (d1, d2, d3) of each of the data packets (PK1-PH12), by the transmission analysis unit (120) of the transmission device (100), wherein the transmission time length (T1, T2) is a time length with which the transmission of each of the data packets (PK1-PH12) is completed;
   allocating each of the data packets (PK1-PK12) to the transmission paths (PH1, PH2) according to each of the transmission time lengths (T1, T2), by an allocation unit (130) of the transmission device (100);
   attaching a sequential code to letter head of each of the data packets (PK1-PH12), by an encoding unit of the transmission device (100); and
   transmitting each of the data packets (PK1-PK12) by the transmission analysis unit (120) of the transmission device (100);
   wherein the step of analyzing the transmission time length (T1, T2) for each of the transmission paths (PH1, PH2) comprises:

   obtaining the data output speed (SP1) of each of the send buffers (B1, B2) , by a speed analyzer of the transmission analysis unit (120) of the transmission device (100); and
   calculating the transmission time length (T1, T2) with which the transmission of each of the data packets (PK1-PH12) is completed by summing a to-be-transmitted data volume (L1, L2) of each of the send buffers (B1, B2) with a packet data volume (d1, d2, d3) of each of the data packets (PK1-PH12) and then divided by the data output speed (SP1, SP2), by a transmission time length estimator of the transmission analysis unit (120) of the transmission device (100).

2. The transmission path allocation method according to claim 1, wherein the transmission paths comprise at least two of a wireless network path, an LTE path, an Ethernet network, a power line network, and a fiber network.

3. The transmission path allocation method according to claim 1, wherein each of the data packets is allocated to one of the transmission paths.

4. The transmission path allocation method according to claim 1, wherein each of the data packets is allocated to two of the transmission paths.

5. The transmission path allocation method according to claim 1, further comprising:

   receiving the data packets; and
   determining whether the data packets need to be re-sorted according to the sequential codes.

6. The transmission path allocation method according to claim 5, further comprising:
   analyzing a re-sorting process quantity for re-sorting the data packets; and constantly allocating each of the data packets to one of the transmission paths if the re-sorting process quantity is over a predetermined threshold.

7. A transmission system (1000), wherein the transmission system comprises:
   a transmission device (100), comprising:

   a data transmission unit (110) configured to transmit a plurality of data packets (PK1-PK12) through at least two transmission paths (PH1, PH2) each having a send buffer (B1, B2);
   a transmission analysis unit (120) configured to obtain a data output speed (SP1) of each of the send buffers (B1, B2) by dividing an output data variation (q1) with a time interval (tint) from a current time point to a next time point and then weighted by at least one weighting coefficients ($\alpha$), and obtain a transmission time length (T1, T2) for each of the transmission paths (PH1, PH2) according to the data output speed (SP1), a to-be-transmitted data amount (L1, L2) of each of the send buffers (B1, B2) and a packet length (d1, d2, d3) of each of the data packets (PK1-PH12), wherein the transmission time length (T1, T2) is a time length with which the transmission of each of the data packets (PK1-PH12) from corresponding one of the send buffers (B1, B2) is completed, wherein the output data variation (q1) is obtained based on a size and a data amount of one of the send buffers (B1, B2) at a current time point and a next time point and a data amount inputted to the one of the send buffers (B1, B2) from the current time point to the next time point;
   an allocation unit (130) configured to allocate each of the data packets (PK1-PK12) to the transmission paths (PH1, PH2) according to each of the transmission time lengths (T1, T2); and
   an encoding unit (140) configured to attach a sequential code to letter head of each of the data packets (PK1-PK12); and
   a reception device (200), comprising:

   a data reception unit (210) configured to receive the data packets (PK1-PK12);
   wherein the transmission analysis unit comprises:

   a speed analyzer configured to obtain a data output speed (SP1) of each of the send buffers (B1, B2) according to the output data variation; and
   a transmission time length estimator configured to calculate the transmission time length (T1, T2) with which the transmission of each of the data packets (PK1-PH12) is completed by summing a to-be-transmitted data volume (L1, L2) of each of the send buffers (B1, B2) with a packet data volume (d1, d2, d3) of each of the data packets (PK1-PH12) and then divided by the data output speed (SP1, SP2).

8. The transmission system according to claim 7, wherein the transmission paths comprise at least two of a wireless network path, an LTE path, an Ethernet network, a power line network, and a fiber network.

9. The transmission system according to claim 7, wherein the allocation unit allocates each of the data packets to one of the transmission paths.

10. The transmission system according to claim 7, wherein the allocation unit allocates each of the data packets to two of the transmission paths.

11. The transmission system according to claim 7, wherein the reception device further comprises:
a re-sorting unit configured to re-sort the data packets according to the sequential codes.

12. The transmission system according to claim 11, wherein the reception device further comprises:

a process quantity analysis unit configured to analyze a re-sorting process quantity for re-sorting the data packets; and
a control unit configured to output a control signal to the transmission device to constantly allocate each of the data packets to one of the transmission paths if the re-sorting process quantity is over a predetermined threshold.

**Patentansprüche**

1. Übertragungspfad-Zuweisungsverfahren für ein Übertragungssystem (1000), das eine Übertragungsvorrichtung (100) aufweist, zum Übertragen einer Mehrzahl von Datenpaketen (PK1-PK12) über mindestens zwei Übertragungspfade (PHI, PH2), die jeweils einen Sendepuffer (B1, B2) haben, wobei das Übertragungspfad-Zuweisungsverfahren aufweist:

Erhalten einer Datenausgabegeschwindigkeit (SP1) jedes der Sendepuffer (B1, B2) durch Dividieren einer Ausgabedatenabweichung (q1) durch ein Zeitintervall (tint) von einem aktuellen Zeitpunkt zu einem nächsten Zeitpunkt und anschließendes Gewichten mit mindestens einem Gewichtungskoeffizienten ($\alpha$) durch eine Übertragungsanalyseeinheit (120) der Übertragungsvorrichtung (100), wobei die Ausgabedatenabweichung (q1) erhalten wird basierend auf einer Größe und einer Datenmenge eines der Sendepuffer (B1, B2) zu einem aktuellen Zeitpunkt und einem nächsten Zeitpunkt und einer Datenmenge, die von dem aktuellen Zeitpunkt bis zu dem nächsten Zeitpunkt in den einen der Sendepuffer (B1, B2) eingegeben wird,
Erhalten einer Übertragungszeitlänge (T1, T2) für jeden der Übertragungspfade (PH1, PH2) entsprechend der Datenausgabegeschwindigkeit (SP1), einer zu übertragenden Datenmenge (L1, L2) jedes der Sendepuffer (B1, B2) und einer Paketlänge (d1, d2, d3) jedes der Datenpakete (PK1-PH12) durch die Übertragungsanalyseeinheit (120) der Übertragungsvorrichtung (100), wobei die Übertragungszeitdauer (T1, T2) eine Zeitdauer ist, mit der die Übertragung jedes der Datenpakete (PK1-PH12) abgeschlossen wird,
Zuweisen jedes der Datenpakete (PK1-PK12) an die Übertragungspfade (PHI, PH2) gemäß jeder der Übertragungszeitlängen (T1, T2) durch eine Zuweisungseinheit (130) der Übertragungsvorrichtung (100),
Anhängen eines sequenziellen Codes an den Briefkopf jedes der Datenpakete (PK1-PH12) durch eine Codierungseinheit der Übertragungsvorrichtung (100), und
Übertragen jedes der Datenpakete (PK1-PK12) durch die Übertragungsanalyseeinheit (120) der Übertragungsvorrichtung (100),
wobei der Schritt des Analysierens der Übertragungszeitlänge (T1, T2) für jeden der Übertragungspfade (PH1, PH2) aufweist:
Erhalten der Datenausgabegeschwindigkeit (SP1) jedes der Sendepuffer (B1, B2) durch einen Geschwindigkeitsanalysator der Übertragungsanalyseeinheit (120) der Übertragungsvorrichtung (100), und
Berechnen der Übertragungszeitlänge (T1, T2), mit der die Übertragung jedes der Datenpakete (PK1-PH12) abgeschlossen wird, durch Summieren eines zu übertragenden Datenvolumens (L1, L2) jedes der Sendepuffer (B1, B2) mit einem Paketdatenvolumen (d1, d2, d3) jedes der Datenpakete (PK1-PH12) und anschließendes Dividieren durch die Datenausgabegeschwindigkeit (SP1, SP2) durch einen Übertragungszeitlängenschätzer der Übertragungsanalyseeinheit (120) der Übertragungsvorrichtung (100).

2. Übertragungspfad-Zuweisungsverfahren gemäß Anspruch 1, wobei die Übertragungspfade mindestens zwei von einem Drahtlosnetzwerkpfad, einem LTE-Pfad, einem Ethernet-Netzwerk, einem Stromleitungsnetzwerk und einem Fasernetzwerk aufweisen.

3. Übertragungspfad-Zuweisungsverfahren gemäß Anspruch 1, wobei jedes der Datenpakete einem der Übertragungspfade zugewiesen wird.

4. Übertragungspfad-Zuweisungsverfahren gemäß Anspruch 1, wobei jedes der Datenpakete zwei der Übertragungspfade zugewiesen wird.

**5.** Übertragungspfad-Zuweisungsverfahren gemäß Anspruch 1, ferner aufweisend:

Empfangen der Datenpakete und
Ermitteln, ob die Datenpakete gemäß den sequenziellen Codes neu sortiert werden müssen.

**6.** Übertragungspfad-Zuweisungsverfahren gemäß Anspruch 5, ferner aufweisend:

Analysieren einer Neusortierprozessmenge zum Neusortieren der Datenpakete, und
ständiges Zuweisen jedes der Datenpakete an einen der Übertragungspfade, wenn die Neusortierprozessmenge über einem vorbestimmten Schwellenwert liegt.

**7.** Übertragungssystem (1000), wobei das Übertragungssystem aufweist:
eine Übertragungsvorrichtung (100), aufweisend:

eine Datenübertragungseinheit (110), die konfiguriert ist, um eine Mehrzahl von Datenpaketen (PK1-PK12) über mindestens zwei Übertragungspfade (PH1, PH2) zu übertragen, die jeweils einen Sendepuffer (B1, B2) haben,
eine Übertragungsanalyseeinheit (120), die konfiguriert ist, um eine Datenausgabegeschwindigkeit (SP1) jedes der Sendepuffer (B1, B2) zu erhalten durch Dividieren einer Ausgabedatenabweichung (q1) durch ein Zeitintervall (tint) ab einem aktuellen Zeitpunkt bis zu einem nächsten Zeitpunkt und anschließendes Gewichten mit mindestens einem Gewichtungskoeffizienten ($\alpha$), und um eine Übertragungszeitlänge (T1, T2) für jeden der Übertragungspfade (PH1, PH2) gemäß der Datenausgabegeschwindigkeit (SP1), einer zu übertragenden Datenmenge (L1, L2) jedes der Sendepuffer (B1, B2) und einer Paketlänge (d1, d2, d3) jedes der Datenpakete (PK1-PH12) zu erhalten, wobei die Übertragungszeitlänge (T1, T2) eine Zeitlänge ist, mit der die Übertragung jedes der Datenpakete (PK1-PH12) von einem korrespondierenden der Sendepuffer (B1, B2) abgeschlossen wird,
wobei die Ausgabedatenabweichung (q1) basierend auf einer Größe und einer Datenmenge eines der Sendepuffer (B1, B2) zu einem aktuellen Zeitpunkt und einem nächsten Zeitpunkt und einer Datenmenge, die in den einen der Sendepuffer (B1, B2) vom aktuellen Zeitpunkt bis zum nächsten Zeitpunkt eingegeben wird, erhalten wird,
eine Zuweisungseinheit (130), die konfiguriert ist, um jedes der Datenpakete (PK1-PK12) den Übertragungspfaden (PHI, PH2) gemäß jeder der Übertragungszeitlängen (T1, T2) zuzuweisen, und
eine Codierungseinheit (140), die konfiguriert ist, um einen sequenziellen Code an den Briefkopf jedes der Datenpakete (PK1-PK12) anzuhängen, und
eine Empfangsvorrichtung (200), die aufweist:

eine Datenempfangseinheit (210), die konfiguriert ist, um die Datenpakete (PK1-PK12) zu empfangen, wobei die Übertragungsanalyseeinheit aufweist:

einen Geschwindigkeitsanalysator, der konfiguriert ist, um eine Datenausgabegeschwindigkeit (SP1) jedes der Sendepuffer (B1, B2) gemäß der Ausgabedatenabweichung zu ermitteln, und
einen Übertragungszeitlängenschätzer, der konfiguriert ist, um die Übertragungszeitlänge (T1, T2) zu berechnen, mit der die Übertragung jedes der Datenpakete (PK1-PH12) abgeschlossen wird, durch Summieren eines zu übertragenden Datenvolumens (L1, L2) jedes der Sendepuffer (B1, B2) mit einem Paketdatenvolumen (d1, d2, d3) jedes der Datenpakete (PK1-PH12) und anschließendes Dividieren durch die Datenausgabegeschwindigkeit (SP1, SP2).

**8.** Übertragungssystem gemäß Anspruch 7, wobei die Übertragungspfade mindestens zwei von einem Drahtlosnetzwerkpfad, einem LTE-Pfad, einem Ethernet-Netzwerk, einem Stromleitungsnetzwerk und einem Fasernetzwerk aufweisen.

**9.** Übertragungssystem gemäß Anspruch 7, wobei die Zuweisungseinheit jedes der Datenpakete einem der Übertragungspfade zuweist.

**10.** Übertragungssystem gemäß Anspruch 7, wobei die Zuweisungseinheit jedes der Datenpakete zwei der Übertragungspfade zuweist.

**11.** Übertragungssystem gemäß Anspruch 7, wobei die Empfangsvorrichtung ferner aufweist:
eine Neusortiereinheit, die konfiguriert ist, um die Datenpakete gemäß den sequenziellen Codes neu zu sortieren.

**12.** Übertragungssystem gemäß Anspruch 11, wobei die Empfangsvorrichtung ferner aufweist:

eine Prozessmengenanalyseeinheit, die konfiguriert ist, um eine Neusortierprozessmenge zum Neusortieren der Datenpakete zu analysieren, und
eine Steuereinheit, die konfiguriert ist, um ein Steuersignal an die Übertragungsvorrichtung auszugeben, um jedes der Datenpakete ständig einem der Übertragungspfade zuzuweisen, wenn die Neusortierprozessmenge über einem vorbestimmten Schwellenwert liegt.

**Revendications**

**1.** Procédé d'attribution de chemin de transmission pour un système de transmission (1000), comprenant un dispositif de transmission (100), pour la transmission d'une pluralité de paquets de données (PK1-PK12) à travers au moins deux chemins de transmission (PH1, PH2) comportant chacun un tampon d'envoi (B1, B2), dans lequel le procédé d'attribution de chemin de transmission comprend :

l'obtention d'une vitesse de sortie de données (SP1) de chacun des tampons d'envoi (B1, B2) en divisant une variation de données de sortie (q1) par un intervalle de temps (tint) d'un moment actuel à un moment suivant, puis pondérée par au moins un coefficient de pondération (α), par une unité d'analyse de transmission (120) du dispositif de transmission (100), dans lequel la variation de données de sortie (q1) est obtenue sur la base d'une taille et d'une quantité de données de l'un des tampons d'envoi (B1, B2) à un moment actuel et à un moment suivant, et d'une quantité de données entrées dans l'un des tampons d'envoi (B1, B2) du moment actuel au moment suivant ;
l'obtention d'une durée de transmission (T1, T2) pour chacun des chemins de transmission (PH1, PH2) en fonction de la vitesse de sortie de données (SP1), d'une quantité de données à transmettre (L1, L2) de chacun des tampons d'envoi (B1, B2) et d'une longueur de paquet (d1, d2, d3) de chacun des paquets de données (PK1-PH12), par l'unité d'analyse de transmission (120) du dispositif de transmission (100), dans lequel la durée de transmission (T1, T2) est une durée pendant laquelle la transmission de chacun des paquets de données (PK1-PH12) est achevée ;
l'attribution de chacun des paquets de données (PK1-PK12) aux chemins de transmission (PH1, PH2) en fonction de chacune des durées de transmission (T1, T2), par une unité d'attribution (130) du dispositif de transmission (100) ;
l'ajout d'un code séquentiel à l'en-tête de chacun des paquets de données (PK1-PH12) par une unité de codage du dispositif de transmission (100) ; et
la transmission de chacun des paquets de données (PK1-PK12) par l'unité d'analyse de transmission (120) du dispositif de transmission (100) ;
dans lequel l'étape consistant à analyser la durée de transmission (T1, T2) pour chacun des chemins de transmission (PH1, PH2) comprend :

l'obtention de la vitesse de sortie de données (SP1) de chacun des tampons d'envoi (B1, B2) par un analyseur de vitesse de l'unité d'analyse de transmission (120) du dispositif de transmission (100) ; et
le calcul de la durée de transmission (T1, T2) avec laquelle la transmission de chacun des paquets de données (PK1-PH12) est achevée en additionnant un volume de données à transmettre (L1, L2) de chacun des tampons d'envoi (B1, B2) avec un volume de données de paquet (d1, d2, d3) de chacun des paquets de données (PK1-PH12), puis en le divisant par la vitesse de sortie de données (SP1, SP2), par un estimateur de durée de transmission de l'unité d'analyse de transmission (120) du dispositif de transmission (100).

**2.** Procédé d'attribution de chemin de transmission selon la revendication 1, dans lequel les chemins de transmission comprennent au moins deux parmi un chemin de réseau sans fil, un chemin LTE, un réseau Ethernet, un réseau de courant porteur et un réseau à fibre.

**3.** Procédé d'attribution de chemin de transmission selon la revendication 1, dans lequel chacun des paquets de données est attribué à l'un des chemins de transmission.

**4.** Procédé d'attribution de chemin de transmission selon la revendication 1, dans lequel chacun des paquets de données est attribué à deux des chemins de transmission.

**5.** Procédé d'attribution de chemin de transmission selon la revendication 1, comprenant en outre :

la réception des paquets de données ; et
la détermination de la nécessité de reclasser les paquets de données en fonction des codes séquentiels.

6. Procédé d'attribution de chemin de transmission selon la revendication 5, comprenant en outre :

l'analyse d'une quantité de processus de reclassement pour reclasser les paquets de données ; et
l'attribution en permanence de chacun des paquets de données à l'un des chemins de transmission si la quantité de processus de reclassement dépasse un seuil prédéterminé.

7. Système de transmission (1000), dans lequel le système de transmission comprend :
un dispositif de transmission (100), comprenant :

une unité de transmission de données (110) configurée pour transmettre une pluralité de paquets de données (PK1-PK12) par l'intermédiaire d'au moins deux chemins de transmission (PH1, PH2) ayant chacun un tampon d'envoi (B1, B2) ;
une unité d'analyse de transmission (120) configurée pour obtenir une vitesse de sortie de données (SP1) de chacun des tampons d'envoi (B1, B2) en divisant une variation de données de sortie (q1) par un intervalle de temps (tint) d'un moment actuel à un moment suivant, puis pondérée par au moins un coefficient de pondération ($\alpha$), et obtenir une durée de transmission (T1, T2) pour chacun des chemins de transmission (PH1, PH2) en fonction de la vitesse de sortie de données (SP1), d'une quantité de données à transmettre (L1, L2) de chacun des tampons d'envoi (B1, B2) et d'une longueur de paquet (d1, d2, d3) de chacun des paquets de données (PK1-PH12), dans lequel la durée de transmission (T1, T2) est une durée pendant laquelle la transmission de chacun des paquets de données (PK1-PH12) à partir de l'un correspondant des tampons d'envoi (B1, B2) est achevée, dans lequel la variation de données de sortie (q1) est obtenue sur la base d'une taille et d'une quantité de données de l'un des tampons d'envoi (B1, B2) à un moment actuel et à un moment suivant, et d'une quantité de données entrées dans l'un des tampons d'envoi (B1, B2) du moment actuel au moment suivant ;
une unité d'attribution (130) configurée pour attribuer chacun des paquets de données (PK1-PK12) aux chemins de transmission (PHI, PH2) en fonction de chacune des durées de transmission (T1, T2) ; et
une unité de codage (140) configurée pour attacher un code séquentiel à l'en-tête de chacun des paquets de données (PK1-PK12) ; et
un dispositif de réception (200), comprenant :

une unité de réception de données (210) configurée pour recevoir les paquets de données (PK1-PK12) ;
dans lequel l'unité d'analyse de transmission comprend :

un analyseur de vitesse configuré pour obtenir une vitesse de sortie de données (SP1) de chacun des tampons d'envoi (B1, B2) en fonction de la variation de données de sortie ; et
un estimateur de durée de transmission configuré pour calculer la durée de transmission (T1, T2) avec laquelle la transmission de chacun des paquets de données (PK1-PH12) est achevée en additionnant un volume de données à transmettre (L1, L2) de chacun des tampons d'envoi (B1, B2) avec un volume de données de paquet (d1, d2, d3) de chacun des paquets de données (PK1-PH12), puis en le divisant par la vitesse de sortie de données (SP1, SP2).

8. Système de transmission selon la revendication 7, dans lequel les chemins de transmission comprennent au moins deux parmi un chemin de réseau sans fil, un chemin LTE, un réseau Ethernet, un réseau de courant porteur et un réseau à fibre.

9. Système de transmission selon la revendication 7, dans lequel l'unité d'attribution attribue chacun des paquets de données à l'un des chemins de transmission.

10. Système de transmission selon la revendication 7, dans lequel l'unité d'attribution attribue chacun des paquets de données à deux des chemins de transmission.

11. Système de transmission selon la revendication 7, dans lequel le dispositif de réception comprend en outre :
une unité de reclassement configurée pour reclasser les paquets de données en fonction des codes séquentiels.

12. Système de transmission selon la revendication 11, dans lequel le dispositif de réception comprend en outre :

une unité d'analyse de quantité de processus configurée pour analyser une quantité de processus de reclassement pour reclasser les paquets de données ; et

une unité de commande configurée pour émettre un signal de commande vers le dispositif de transmission afin d'attribuer en permanence chacun des paquets de données à l'un des chemins de transmission si la quantité de processus de reclassement dépasse un seuil prédéterminé.

910

SN1

920

SN2

930

FIG. 1

FIG. 2

| transmission device <u>100</u> | reception device <u>200</u> |
|---|---|

**S110**

Analyze a transmission time length for each of the transmission paths according to an output data variation of each of the send buffers

**S120**

Allocate each of the data packets to the transmission paths according to each of the transmission time lengths

**S130**

Attach a sequential code to each of the data packets

**S140**

Transmit each of the data packets

**S150**

Receive the data packets

**S160**

Re-sort the data packets according to the sequential codes

**S170**

Is the re-sorting process quantity over a predetermined threshold?

No

Yes

**S190**

Constantly allocate each of the data packets to one of the transmission paths

**S180**

Output a notification message

# FIG. 3

FIG. 4

EP 3 783 850 B1

PH1:
| C12 | | C11 | | C9 | | C8 | | C7 | | C5 | | C4 | | C3 | | C1 | |

PH2:
| C10 | | | | C6 | | | | C2 | | | |

↓

| C10 | | C12 | | C11 | | C9 | | C6 | | C8 | | C7 | | C5 | | C2 | | C4 | | C3 | | C1 | |

↓

| C12 | | C11 | | C10 | | C9 | | C8 | | C7 | | C6 | | C5 | | C4 | | C3 | | C2 | | C1 | |

# FIG. 5

## FIG. 6

## FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015207715 A1
- JP H027762 A
- WO 2018113393 A1